# EUROPEAN PATENT APPLICATION

(11) **EP 0 774 737 A2**
(43) Date of publication of application: **21.05.1997**
(21) Application number: 96308163.3
(22) Date of filing: 12.11.1996
(51) Int. Cl.: G07C 9/00, G07F 7/10

(54) **An authorization device**

(30) Priority: 16.11.1995 GB 9523377
(71) Applicant: NCR INTERNATIONAL INC., Dayton, Ohio 45479 (US)
(72) Inventor: Stewart, Mark J., Broughty Ferry, Dundee, DD5 2EH (GB)
(74) Representative: Robinson, Robert George

(57) **Abstract**

The invention relates to an authorisation device comprising a carrier having therein a data storage means (4) and a communication means (6) adapted to communicate with a corresponding communication means (8) in a separate data reader (10), so that data stored in said data storage means (4) can be transmitted to said data reader (10). The authorisation device includes attachment means (17) whereby the device may be attached to a user, and the device has an additional purpose other than serving as an authorisation means. Thus, the carrier of the device may be in the form of a wrist watch (2).

## Description

The present invention relates to an authorisation device for authorising a person to carry out some predetermined action or procedure.

The invention has application, for example, as part of an access control system which in use controls the access of persons to a secure area or to a financial facility such as an automated teller machine (ATM).

At present, persons may be provided with a plurality of different plastic cards, each of which identifies the card holder and enables the card holder to gain access to one of a plurality of different financial facilities and also possibly to one or more secure areas. Such a plastic card may, for example, be a credit or a debit card which additionally may be used as an identification card for accessing ATMs. The data required for enabling a card holder to gain access to a financial facility or secure area may be stored in a magnetic stripe carried on the card, or in an integrated circuit (IC) chip embedded in the card in the case of a so-called smart card. A smart card will also incorporate communication means adapted to communicate with corresponding communication means in a separate card reader, such that data stored in the IC chip can be transmitted to the card reader.

A problem with magnetic stripe or smart cards is that persons may forget to carry them and may therefore be unable to obtain access to a desired financial facility or secure area. A further problem is that persons may not feel safe carrying a wallet or other holder containing such cards due to the fear of theft.

It is an object of the present invention to provide an authorisation device which alleviates one or both of the abovementioned problems.

According to the invention there is provided an authorisation device comprising a carrier for carrying data storage means and communication means adapted to communicate with accompanying communication means in a separate data reader, such that data stored in said data storage means can be transmitted to said data reader, characterized in that there are provided attachment means whereby said authorisation device may be attached to a user, and in that said authorisation device has an additional purpose other than serving as an authorisation means.

Preferably, said carrier of an authorisation device in accordance with the invention comprises a wrist watch.

An advantage of using a wrist watch as the data carrier of an authorisation device is that the user is unlikely to leave home without his wrist watch and so is unlikely to find himself without the means necessary to gain access to a desired financial facility or secure area.

Furthermore, since an authorisation device in accordance with the invention is adapted to be attached to a person, the carrier being for example in the form of a wrist watch or bracelet, such device has the advantage of increased security for the user since it is less likely than a holder such as a wallet to be stolen without the user's knowledge.

Embodiments of the present invention will now be described, by way of example, with reference to the accompanying drawings, in which:
Fig. 1A illustrates an authorisation device in accordance with the present invention in which the carrier takes the form of a wrist watch and the data storage means is in the form of an IC chip;
Fig. 1B illustrates an authorisation device similar to that shown in Fig. 1A except that the data storage means and the communication means are combined in a magnetic stripe;
Fig. 2 illustrates a block diagram of the authorisation device of Fig. 1A;
Fig. 3 illustrates an ATM adapted to communicate with the authorisation device of Fig. 1A; and
Fig.4 illustrates an authorisation device in accordance with the present invention in which the carrier takes the form of a bracelet.

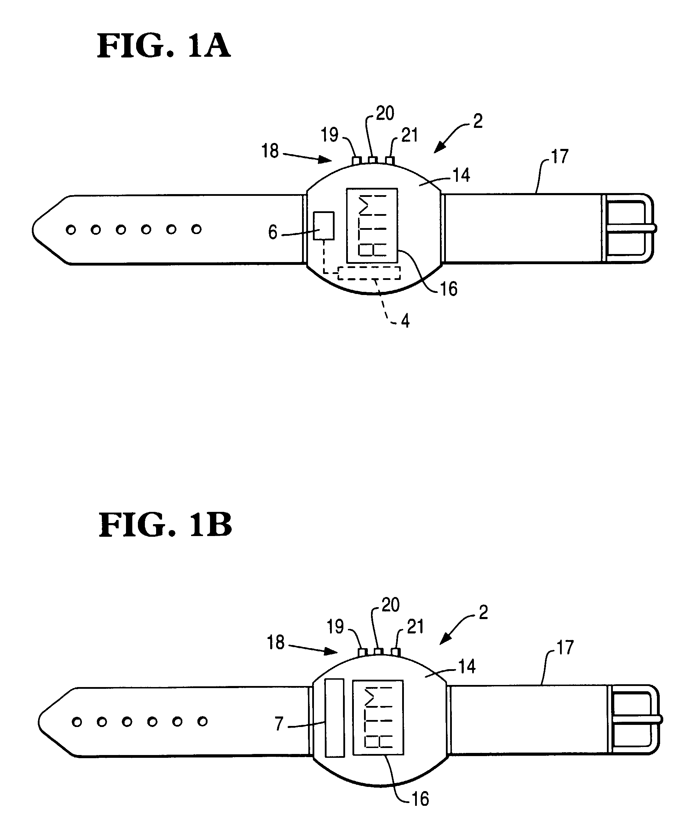

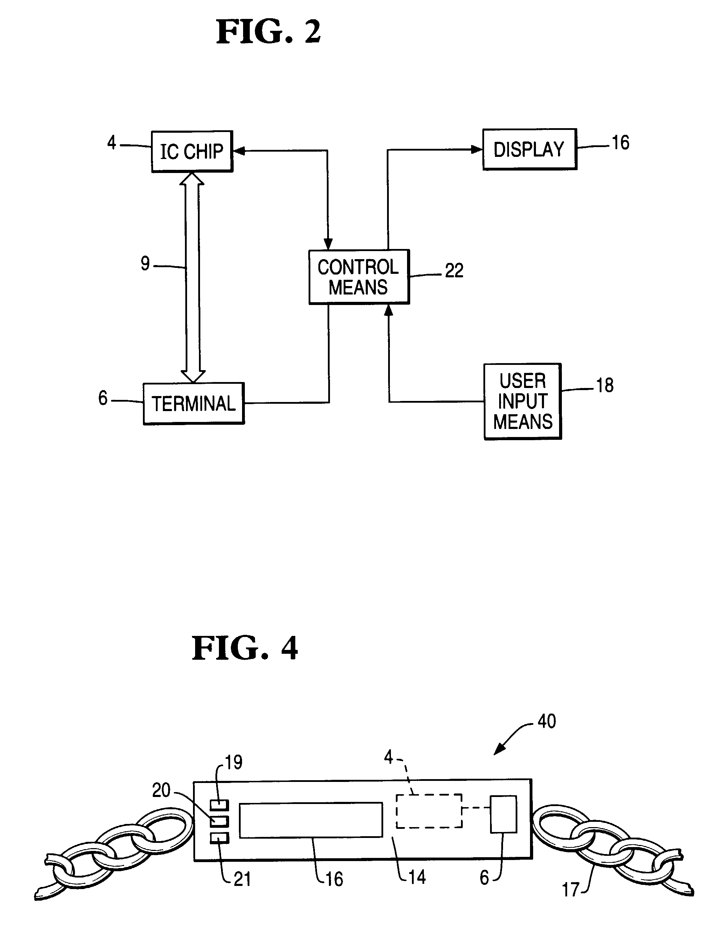

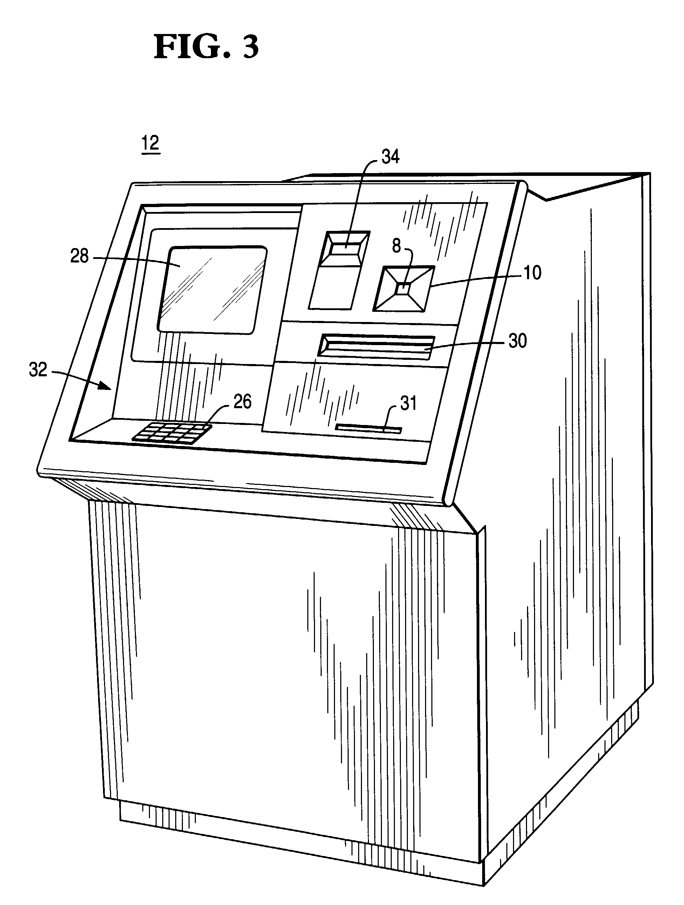

With reference to Figs 1A and 2 there is illustrated an authorisation device comprising a carrier in the form of a wrist watch 2 having therein a data storage means in the form of an IC chip 4. The wrist watch 2 also incorporates a communication means in the form of a contactless IC terminal 6, adapted to communicate with a corresponding contactless terminal 8 on a reader 10 which is located in an ATM 12 (Fig. 3).

The wrist watch 2 comprises a watch face 14 having a display 16 which displays both temporal information and information regarding the use of the wrist watch 2 as an authorisation device, as will be described in detail below. In conventional manner, the wrist watch 2 is provided with a strap 17 for enabling the watch 2 to be attached to a user's wrist.

The wrist watch 2 is operated by the user both as a watch and as an authorisation device through user input means 18 in the form of a series of three buttons 19, 20 and 21 located on the side of the watch face 14. The user input means 18 are connected to an electronic control means 22 (Fig. 2) located within the watch 2, which controls the operation of the watch 2.

The contactless IC terminal 6 is similar to those terminals commonly used with presently available smart cards, as will be known to persons skilled in the art. Likewise, the IC chip 4 is similar to those utilized in presently available smart cards, as will also be known to persons skilled in the art.

Referring particularly to Fig. 3, there is illustrated an ATM 12 comprising such standard ATM features as a key pad 26 and display 28 for enabling communication between the ATM 12 and the user once the user has gained access to the ATM 12. The ATM 12 also comprises a currency dispensing slot 30 and a transaction receipt dispensing slot 31, which are also standard ATM features. The ATM 12 is, however, adapted for use with the watch 2 by the location on the front fascia 32 of the ATM 12 of a contactless IC terminal 8 adapted to communicate with the corresponding terminal 6 on the wrist watch 2, as will be described in detail below.

The contactless terminal 8 on the ATM 12 is such that the corresponding terminal 6 on the watch 2 need not be brought into physical contact with the terminal 8 in order to transmit data between the watch 2 and the ATM 12. Such a terminal is presently used with smart card readers, known to persons skilled in the art as proximity readers.

The ATM 12 may also comprise a presently available magnetic stripe or smart card reader (not shown), which is accessed through a slot 34 in the front fascia 32 of the ATM 12, in order for the ATM 12 to be operable, both with the watch 2 and with presently available user identification cards.

The data stored in the IC chip 4 in the watch 2 can include a user's bank account details and user identification details as required to access an ATM. In addition, the data may include information required to enable access to a user's credit facility, so that communication between the watch 2 and the reader 10 would enable a user to use his credit facility in the same manner as is currently achieved using a standard plastic data card, and a card reader.

A plurality of different functions normally requiring a plurality of individual plastic data cards may be programmed into the IC chip 4 in the watch 2, thus negating the present requirement for a separate plastic data card for each of these functions.

Different functions can be added to the IC chip 4 by bringing the watch 2 into communication with a dedicated reader/writer (not shown) and instructing the reader/writer to write into the IC chip 4 the necessary data for utilizing the function in question. A Similar reader/writer, adapted to write such data into presently available smart cards, is known to persons skilled in the art. The difference between presently available reader/writers and a reader/writer adapted for use with the watch 2 is that the latter would comprise a contactless IC chip terminal arranged to communicate with the terminal 6 on the watch 2.

Likewise, functions can be removed from the IC chip 4 by the reader/writer, by sending a signal to the watch 2 to delete the data relating to the function in question from the chip 4.

Such reader/writers would be operated by the financial institution or other organisation operating the function which is to be provided by the watch 2.

When a user wishes to use the watch 2 in order to access an ATM 12, he must first actuate the ATM "user identification" function in the watch 2. This is achieved by firstly depressing the first button 19 on the side of the watch 2 to enter a so-called "function mode" in which the different functions stored in the IC chip 4 can be accessed. The user then selects the desired function by repeatedly depressing the second button 20, which causes the watch 2 to scroll through each of the functions stored in the IC chip 4 one by one each time the second button 20 is depressed, each function being presented in the display 16 as it is accessed in the IC chip 4.

Once the user has selected the desired function, namely ATM user identification, as illustrated in the display 16 in Fig. 1A by the legend "ATM", he positions the watch 2 such that the terminal 8 on the ATM 12 is within range of the terminal 6, say for example within 5 cms of the terminal 8. The user then depresses the third button 21 which actuates the IC chip 4 to send the data relating to the aforementioned function, which is required by the ATM 12, to the terminal 6, via the data bus 9 (Fig. 2), the terminal 6 serving to transmit the aforementioned data to the terminal 8 on the ATM 12.

Once the reader 10 within the ATM 12 has received the aforementioned data from the watch 2 the data is processed in a processor (not shown) in the ATM 12, in the same manner as data presently received from plastic data cards is processed by known readers in state of the art ATMs .

As with presently available ATMs, the ATM 12 will then request that the user enter a personal identification number (PIN) before allowing access to the ATM 12. If the PIN number is entered correctly then the user may use the services provided by the ATM 12, in the normal manner. However, if the PIN number is entered incorrectly a predetermined number of times, then the ATM 12 will refuse further attempts to enter the PIN number and access to the ATM 12 will be denied to the user on this occasion.

As an alternative to an IC chip 4 and a terminal 6 the watch 2 in accordance with the present invention may utilize a magnetic stripe 7 (Fig. 1B), which is read by a magnetic stripe reader (not shown) on an ATM or other transaction terminal.

Also, as an alternative to a wrist watch 2, another object, such as a bracelet 40 (Fig 4), which is adapted to be attached to a person may be utilized as the carrier of an authorisation device in accordance with the present invention. In Fig. 4 the component parts of the access device which are common to the authorisation devices of Figs 1A and 1B are denoted by the same reference numerals.

Finally, as an alternative to an ATM 12, an access device in accordance with the present invention may be utilized with any system which presently utilizes plastic data cards and cooperating card readers, such as a point of sale terminal (not shown) adapted to receive credit or debit cards, or an entry control device (not shown) which controls entry to a secure area.

## Claims

1. An authorisation device comprising a carrier for carrying data storage means (4) and communication means (6) adapted to communicate with corresponding communication means (8) in a separate data reader (10), such that data stored in said data storage means (4) can be transmitted to said data reader (10), characterized in that there are provided attachment means (17) whereby said authorisation device may be attached to a user, and in that said authorisation device has an additional purpose other than serving as an authorisation means.

2. An authorisation device according to claim 1, characterized in that said data storage means (4) comprises an integrated circuit chip.

3. An authorisation device according to either claim 1 or claim 2, characterized in that said communication means comprises a contactless integrated circuit terminal (6).

4. An authorisation device according to claim 1, characterized in that said data storage means (4) and said communication means (6) are combined in a magnetic stripe (7).

5. An authorisation device according to any one of the preceding claims, characterized in that said data storage means (4,7) is arranged to store data relating to one or more functions provided by said access device.

6. An authorisation device according to claim 5, characterized in that said authorisation device is adapted to scroll through two or more functions stored in said data storage means (4), and to display each function on a display (16) located on a face (14) of said authorisation device once each function is accessed.

7. An authorisation device according to claim 6, characterized by user input means (18) through which the user can select and access each of said functions provided by said authorisation device.

8. An authorisation device according to either claim 6 or claim 7, characterized in that functions may be added to or removed from said functions provided by said authorisation device.

9. An authorisation device according to any one of the preceding claims, characterized in that said carrier comprises a wrist watch (2).
